# EUROPÄISCHE PATENTANMELDUNG

(11) **EP 4 372 870 A2**
(43) Veröffentlichungstag der Anmeldung: **22.05.2024**
(21) Anmeldenummer: 23191232.0
(22) Anmeldetag: 14.08.2023
(51) Int. Cl.: H01M 10/653, H01M 50/103, H01M 50/169

(54) **BATTERIE MIT EINEM GEHÄUSE UND EINER ELEKTRISCH ISOLIERENDEN UMHÜLLUNG**

(30) Priorität: 15.08.2022 DE 102022120549
(71) Anmelder: VOLKSWAGEN AKTIENGESELLSCHAFT, 38440 Wolfsburg (DE)
(72) Erfinder: Kwoczek, Lukas, 38102 Braunschweig (DE)
(74) Vertreter: Bungartz, Florian

(57) **Zusammenfassung**

Eine Batterie umfasst ein Batterieelement oder mehrere Batterieelemente, die in einem Gehäuse (2) aufgenommen sind, und eine elektrisch isolierende Umhüllung (1) für das Gehäuse (2), wobei die Umhüllung (1) aus mindestens einem Folienwerkstoff ausgebildet ist und wobei der mindestens eine Folienwerkstoff an mindestens einer Nahtstelle (9) der Umhüllung überlappt. Der mindestens eine überlappende Folienwerkstoff ist an der mindestens einen Nahtstelle (9) verschweißt, um eine möglichst gut abdichtende Umhüllung (1) zu realisieren.

## Beschreibung

Die Erfindung betrifft eine Batterie mit einem oder mehreren Batterieelementen, die in einem Gehäuse aufgenommen sind, und mit einer elektrisch isolierenden Umhüllung für das Gehäuse, wobei die Umhüllung aus mindestens einem Folienmaterial ausgebildet ist, wobei das mindestens eine Folienmaterial an mindestens einer Nahtstelle überlappt.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird. Im Kontext der Erfindung werden als Batterien sowohl sogenannte Primärbatterien, die nur für eine einmalige Entladung und nicht für ein erneutes Laden vorgesehen sind, als auch sogenannte Sekundärbatterien beziehungsweise Akkumulatoren, die für ein mehrfaches Laden und Entladen vorgesehen und entsprechend ausgelegt sind, verstanden. Ein Laden einer Sekundärbatterie stellt dabei die elektrolytische Umkehrung der bei der Entladung ablaufenden elektrochemischen Redoxreaktion dar, die durch das Anlegen einer elektrischen Spannung realisiert wird.

Eine Batterie umfasst eine oder, üblicherweise, mehrere Batterieelemente, die innerhalb einer Umhüllung, üblicherweise in Form einer häufig als "Pouch" bezeichneten Folienumhüllung oder eines Gehäuses, angeordnet sind. Die Batterieelemente umfassen jeweils zwei Elektroden, einen zwischen den Elektroden angeordneten Separator zur elektrischen Separierung der Elektroden und einen als lonenleiter dienenden Elektrolyten. Die zwei Elektroden eines Batterieelements unterschieden sich hinsichtlich eines umfassten Aktivmaterials, wodurch eine der Elektroden anodisch und die andere kathodisch wirksam ist (jeweils bezogen auf ein Entladen der Batteriezelle). Weiterhin umfasst eine Batterie üblicherweise zwei Batteriepole, die in die Umhüllung integriert sind und die innenseitig der Umhüllung über sogenannte Stromableiter mit den Elektroden elektrisch leitend verbunden sind. Dabei sind alle anodisch wirksamen Elektroden mit einem der Batteriepole und die kathodisch wirksamen Elektroden mit dem anderen der Batteriepole verbunden.

Eine Ausgestaltung einer Batterie mit einem Gehäuse kann den Vorteil einer im Vergleich zu Batterien mit einer Folienumhüllung höheren strukturellen Belastbarkeit der Batterie aufweisen. Häufig wird ein Gehäuse einer Batterie aus einem Metall, insbesondere Aluminium, ausgestaltet, um eine ausreichend hohe strukturellen Festigkeit und damit Belastbarkeit bei gleichzeitig guter und kostengünstiger Herstellbarkeit sowie bei relativ geringem Gewicht zu realisieren. Da ein solches Gehäuse selbst jedoch elektrisch leitfähig ist kann es sinnvoll oder notwendig sein, dieses gegen die Umgebung elektrisch zu isolieren, wozu das Gehäuse zusätzlich mit einer elektrisch isolierenden Umhüllung versehen werden kann.

Eine solche Batterie ist aus der JP 2002-184364 A bekannt, wobei das Folienmaterial der Umhüllung zumindest im Bereich einer Nahtstelle einen thermisch aktivierbaren Klebstoff zum Verkleben der Umhüllung im Bereich der Nahtstelle aufweist. Das Aktivieren des Klebstoffs kann dabei mittels eines heißen Presswerkzeugs, das gegen die Nahtstelle gedrückt wird, erfolgen.

Die CN 211 764 018 U und die US 2012/0219847 A1 offenbaren jeweils eine Batterie mit einer auch als Pouch bezeichneten Folienumhüllung.

Der Erfindung liegt die Aufgabe zugrunde, eine Batterie mit einem Gehäuse sowie mit einer das Gehäuse umgebenden, elektrisch isolierenden Umhüllung zu verbessern.

Diese Aufgabe ist bei einer Batterie gemäß dem Patentanspruch 1, die mittels eines Verfahrens gemäß dem Patentanspruch 8 herstellbar ist, gelöst. Bevorzugte Ausgestaltung einer solchen Batterie und vorteilhafte Ausführungsformen des erfindungsgemäßen Verfahrens sind Gegenstände der weiteren Patentansprüche und ergeben sich aus der nachfolgenden Beschreibung der Erfindung.

Erfindungsgemäß ist eine Batterie, insbesondere eine Lithium-Ionen-Batterie und/oder eine als Traktionsbatterie eines Kraftfahrzeugs vorgesehene Batterie vorgesehen. Die Batterie umfasst mindestens ein Batterieelement, vorzugsweise mehrere Batterieelemente, und ein das Batterieelement oder die Batterieelemente (vollständig) umgebendes Gehäuse.

Das mindestens eine Batterieelement umfasst (jeweils) zwei Elektroden, einen zwischen den Elektroden angeordneten Separator zur elektrischen Separierung der Elektroden und einen als lonenleiter zwischen den Elektroden dienenden Elektrolyten. Dieser Elektrolyt kann flüssig oder fest ausgestaltet sein und, insbesondere bei einer festen Ausgestaltung, auch als Separator fungieren. Eine erfindungsgemäße Batterie kann weiterhin einen ersten Batteriepol und einen zweiten Batteriepol umfassen, wobei die Batteriepole zur elektrischen Anbindung der Batterie an einen externen Stromkreis vorgesehen sind. Dazu können die Batteriepole derart in das Gehäuse integriert sein, dass ein erster Abschnitt davon außerhalb des Gehäuses angeordnet und dadurch für eine Anbindung an den externen Stromkreis zugänglich ist, während ein zweiter, innerhalb der Umhüllung liegender Abschnitt einer elektrischen Verbindung mit den Batterieelementen dient. Dabei ist eine erste Elektrode des (jedes) Batterieelement(s) mit dem ersten Batteriepol und eine zweite Elektrode des (jedes) Batterieelement(s) mit dem zweiten Batteriepol elektrisch verbunden.

Das Gehäuse ist vorzugsweise formstabil ausgestaltet. Als "formstabil" gilt dabei ein Gehäuse, wenn dessen dreidimensionale Form ohne externe Belastung nicht infolge der eigenen Gewichtskraft kollabiert. Vorzugsweise kann ein solches Gehäuse derart formstabil ausgestaltet sein, dass dieses bei einer Belastung durch externe Kräfte, die bei einer normalen Nutzung auftreten, nicht kollabiert und, besonders bevorzugt, auch nicht in einem relevanten Maße deformiert wird. Das Gehäuse kann weiterhin bevorzugt vollständig oder teilweise aus Metall, beispielsweise Aluminium, ausgestaltet sein. Weiterhin bevorzugt kann das Gehäuse derart ausgestaltet sein, dass dieses gasdicht verschlossen ist, was sich positiv hinsichtlich der Leistungsfähigkeit und der Betriebssicherheit der Batterie auswirken kann.

Eine erfindungsgemäße beziehungsweise erfindungsgemäß herzustellende Batterie umfasst weiterhin eine elektrisch isolierende Umhüllung für das Gehäuse, wobei die Umhüllung das Gehäuse vorzugsweise vollumfänglich umgibt. Die Umhüllung ist aus mindestens einem Folienwerkstoff ausgebildet, wobei der mindestens eine Folienwerkstoff an mindestens einer Nahtstelle überlappt. Die Umhüllung kann dabei vorzugsweise zumindest teilweise durch Umwickeln des Gehäuses mit dem mindestens einen Folienwerkstoff ausgebildet werden. Der Folienwerkstoff kann vorzugsweise Kunststoff aufweisen oder daraus ausgestaltet sein, wodurch kostengünstig und gut verarbeitbar eine elektrisch isolierende Umhüllung ausgestaltet werden kann. Der Folienwerkstoff kann vorzugsweise auch Metall, beispielsweise Aluminium, aufweisen, wodurch die Belastbarkeit und insbesondere die Reißfestigkeit des Folienwerkstoffs verbessert werden kann. Besonders bevorzugt kann vorgesehen sein, dass der Folienwerkstoff mindestens eine Schicht aus Kunststoff und mindestens eine Schicht aus Metall aufweist. Insbesondere kann vorgesehen sein, dass mindestens zwei Schichten aus Kunststoff vorgesehen sind, wobei eine Schicht aus Metall, sofern vorgesehen, zwischen den beiden Schichten aus Kunststoff gelegen ist.

Erfindungsgemäß ist vorgesehen, dass der mindestens eine überlappende Folienwerkstoff an der mindestens einen Nahtstelle verschweißt ist beziehungsweise wird. Dadurch kann relativ einfach und sicher eine fluiddichte Ausgestaltung der Nahtstelle realisiert werden, wodurch vermieden werden kann, dass ein insbesondere flüssiges Medium, insbesondere auch aufgrund einer Kapillarwirkung, über die Nahtstelle bis zu dem Gehäuse gelangt und dadurch eine Korrosion des Gehäuses bewirken kann. Dementsprechend kann vorzugsweise vorgesehen sein, dass sämtliche Nahtstellen der Umhüllung, die durch Überlappung des mindestens einen Folienwerkstoffs ausgebildet sind, entsprechend verschweißt sind/werden.

Unter (Ver-)Schweißen wird erfindungsgemäß allgemein das unlösbare Verbinden eines oder mehrerer Werkstoffe unter Anwendung von Wärme und/oder Druck, mit oder ohne Schweißzusatzstoffe, verstanden, wobei mindestens ein Material des Werkstoffs oder der Werkstoffe aufgeschmolzen wird, wobei beim Erstarren der Schmelze eine stoffschlüssige Verbindung bewirkt wird. Erfindungsgemäß ist vorzugsweise ein Schmelzschweißen des mindestens einen Folienwerkstoff an der mindestens einen Nahtstelle vorgesehen, so dass für das Schweißen ein Schmelzen zumindest eines Materials des Folienwerkstoffs selbst im Bereich der Nahtstelle bewirkt wird.

Gemäß einer bevorzugten Ausgestaltungsform der erfindungsgemäßen Batterie und gemäß einer bevorzugten Ausführungsform des erfindungsgemäßen Verfahrens kann vorgesehen sein, dass die Umhüllung mit dem Gehäuse verklebt ist/wird. Hierzu kann der mindestens eine Folienwerkstoff vorzugsweise bereits im Ausgangszustand, d.h. vor der Verbindung mit dem Gehäuse zur Ausbildung der Umhüllung, eine Klebeschicht aufweisen. Die Klebeschicht kann dabei insbesondere bereits Teil des Folienwerkstoffs in einem Lieferzustand sein, so dass im Rahmen der Herstellung der Batterie ein Auftragen des Klebstoffs nicht mehr erfolgen muss. Durch ein Verkleben der Umhüllung mit dem Gehäuse kann realisiert werden, dass diese möglichst vollumfänglich an dem Gehäuse anliegt. Auch kann ein solches Verkleben der Umhüllung mit dem Gehäuse die Anbringung der Umhüllung selbst vereinfachen. Zudem kann ein solches Verkleben der Umhüllung mit dem Gehäuse ein Eindringen eines insbesondere flüssigen Mediums in den Bereich zwischen der Umhüllung dem Gehäuse bereits weitgehend verhindern und somit abdichtend wirken. Es hat sich jedoch gezeigt, dass eine ausreichend sichere Abdichtung zumindest im Bereich der mindestens einen Nahtstelle der Umhüllung, in der der mindestens eine Folienwerkstoff überlappt, nicht immer durch die Verklebung gewährleistet werden kann, so dass erfindungsgemäß das (zusätzliche) Verschweißen des Folienwerkstoffs im Bereich der Nahtstelle vorgesehen ist.

Das Verschweißen kann vorzugsweise mittels eines die Nahtstelle kontaktierenden, heißen Schweißwerkzeugs bewirkt werden. Dies stellt eine einfache Möglichkeit zum Einbringen von Wärme in die Nahtstelle zum Aufschmelzen zumindest eines Materials des Folienwerkstoffs dar, wobei gleichzeitig ausreichend Druck aufgebracht wird, um die Überlappung des mindestens einen Folienwerkstoffs bis zu einem Aushärten der Schmelze zu fixieren. Dabei kann vorzugsweise vorgesehen sein, dass der mindestens eine Folienwerkstoff im Bereich der Nahtstelle mittels des Schweißwerkzeugs gegen das Gehäuse gedrückt wird.

Das Schweißwerkzeug kann vorzugsweise eine für einen Kontakt mit der Nahtstelle der Umhüllung vorgesehene Kontaktfläche aufweisen, wobei die Kontaktfläche eine Antihaftwirkung aufweist. Die Kontaktfläche ist demnach derart ausgestaltet, dass ein gegebenenfalls noch aufgeschmolzenes Material des mindestens einen Folienwerkstoffs im Wesentlichen nicht an der Kontaktfläche haften bleibt. Hierzu kann die Kontaktfläche des Schweißwerkzeugs beispielsweise aus einem entsprechenden Material, wie z.B. PTFE, ausgestaltet sein.

Gemäß einer vorteilhaften Ausgestaltungsform einer erfindungsgemäßen Batterie kann vorgesehen sein, dass der mindestens eine Folienwerkstoff an den in der Nahtstelle liegenden (einander kontaktierenden) Kontaktflächen aus demselben Material, vorzugsweise einem Kunststoff, besteht, wodurch ein vorteilhaftes Verbinden des mindestens einen Folienwerkstoff durch insbesondere ein Schmelzschweißen dieses Materials realisiert werden kann.

Weiterhin bevorzugt kann vorgesehen sein, dass der mindestens eine Folienwerkstoff oder mindestens einer, gegebenenfalls mehrere oder alle von mehreren Folienwerkstoffen vollständig aus einem einzigen Material oder zumindest aus einem einzigen Kunststoff (und gegebenenfalls einem oder mehreren anderen Materialien, z.B. Metall(en)) ausgebildet ist. Dadurch kann eine möglichst kostengünstige Ausgestaltung der Umhüllung realisiert werden.

Zudem kann bevorzugt vorgesehen sein, dass der mindestens eine Folienwerkstoff oder mindestens einer, gegebenenfalls mehrere oder alle von mehreren der Folienwerkstoffe aus mindestens zwei unterschiedlichen Materialen, vorzugsweise zumindest zwei unterschiedlichen Kunststoffen, ausgebildet ist/sind. Die unterschiedlichen Materialen können dabei vorzugsweise in separaten, vorzugsweise aber miteinander verbundenen Schichten des Folienwerkstoffs vorliegen. Dadurch kann ein besser belastbarer und/oder verarbeitbarer Folienwerkstoff erhalten werden.

Besonders bevorzugt kann dann noch vorgesehen sein, dass der mindestens eine Folienwerkstoff zumindest an der Nahtstelle eine erste, innen (d.h. näher an dem Gehäuse) liegende Schicht aus einem ersten der Materialien und eine zweite, außen (d.h. auf der von dem Gehäuse abgewandten Seite der ersten Schicht) liegende Schicht aus einem zweiten der Materialien aufweist, wobei das erste Material eine niedrigere Schmelztemperatur als das zweite Material aufweist. Dadurch wird in vorteilhafter Weise ermöglicht, das erste Material für ein Verschweißen der Nahtstelle aufzuschmelzen, während das zweite Material nicht aufgeschmolzen wird und dadurch die Integrität des Folienwerkstoffs gewährleisten kann. Wenn das zweite Material nicht aufgeschmolzen wird, kann zudem eine ungewollte Verbindung mit und damit Haftung an dem Schweißwerkzeug vermieden werden. Insbesondere in einem solchen Fall kann gegebenenfalls auf eine Ausgestaltung des Schweißwerkzeugs mit einer Antihaftwirkung der Kontaktfläche verzichtet werden. Sofern an der Nahtstelle unterschiedliche Folienwerkstoffe überlappen, gilt diese Ausgestaltung beziehungsweise Anordnung der unterschiedlichen Materialien zumindest und, vorzugsweise, ausschließlich für den außen in der Überlappung liegenden der Folienwerkstoffe.

Das Gehäuse einer erfindungsgemäßen Batterie kann vorzugsweise eine Quaderform aufweisen. Ein quaderförmiges Gehäuse weist eine Länge, Breite und Höhe auf, wobei erfindungsgemäß die Länge die größte, die Breite die mittlere und die Höhe die kleinste der (Kanten-)Abmessungen ist (sofern entsprechende Unterschiede vorliegen). Eine quaderförmige Batterieumhüllung umfasst zwei Großseiten, die durch die Länge und die Breite aufgespannt werden, zwei Längsseiten, die durch die Länge und die Höhe aufgespannt werden, sowie zwei Stirnseiten, die durch die die Breite und die Höhe aufgespannt werden. Batteriepole der Batterie können dabei vorzugsweise in eine oder in beide der Stirnseiten integriert sein.

Bei einer solchen Batterie mit einem quaderförmigen Gehäuse kann die Umhüllung vorzugsweise an den Großseiten und den Längsseiten des Gehäuses aus einem ersten Umhüllungsteil und an den Stirnseiten aus jeweils einem zweiten Umhüllungsteil ausgebildet sein, wobei, weiterhin bevorzugt, der erste Umhüllungsteil und der zweite Umhüllungsteil aus unterschiedlichen der Folienwerkstoffe bestehen können. Dabei kann zudem vorgesehen sein, dass der erste Umhüllungsteil auch die Stirnseiten des Gehäuses teilweise oder vollständig überdeckt und die zweiten Umhüllungsteile die dortigen Abschnitte des ersten Umhüllungsteils überlappen, um jeweils eine oder mehrere Nahtstellen auszubilden. Besonders bevorzugt kann dabei vorgesehen sein, dass die zweiten Umhüllungsteile jeweils aus einem Folienwerkstoff ausgestaltet sind, der mindestens zwei Materialien umfasst. Der erste Umhüllungsteil kann dann, insbesondere wenn dieser selbst keine Nahtstelle ausbildet, vorzugsweise aus einem Folienwerkstoff ausgestaltet sein, der nur ein einziges Material oder zumindest nur einen einzigen Kunststoff umfasst. Bildet der erste Umhüllungsteil dagegen selbst mindestens eine Nahtstelle aus, kann dieser vorzugsweise aus einem Folienwerkstoff, der mindestens zwei Materialien umfasst, und insbesondere aus demselben Folienwerkstoff wie die zweiten Umhüllungsteile, ausgestaltet sein.

Die Erfindung wird nachfolgend anhand von in den Zeichnungen dargestellten Ausgestaltungs- und Ausführungsbeispielen näher erläutert. In den Zeichnungen zeigt, jeweils in vereinfachter Darstellung:
- Fig. 1:: Zuschnitte von Folienwerkstoffen zur Ausbildung einer Umhüllung für ein Gehäuse einer erfindungsgemäßen Batterie;
- Fig. 2:: ein Fixieren der Folienwerkstoffe an dem Gehäuse der Batterie zur Ausbildung der Umhüllung;
- Fig. 3:: einen Abschnitt der Batterie nach der Ausbildung der Umhüllung;
- Fig. 4 bis 6:: verschiedene Verfahrensschritte zum Verschweißen von Nahtstellen der Umhüllung im Bereich einer Stirnseite einer erfindungsgemäßen Batterie gemäß einer ersten Ausführungsform der Erfindung;
- Fig. 7 bis 9:: verschiedene Verfahrensschritte zum Verschweißen von Nahtstellen der Umhüllung im Bereich einer Stirnseite einer erfindungsgemäßen Batterie gemäß einer zweiten Ausführungsform der Erfindung; und
- Fig. 10:: eine Längsschnittdarstellung einer erfindungsgemäßen Batterie (noch ohne Umhüllung).

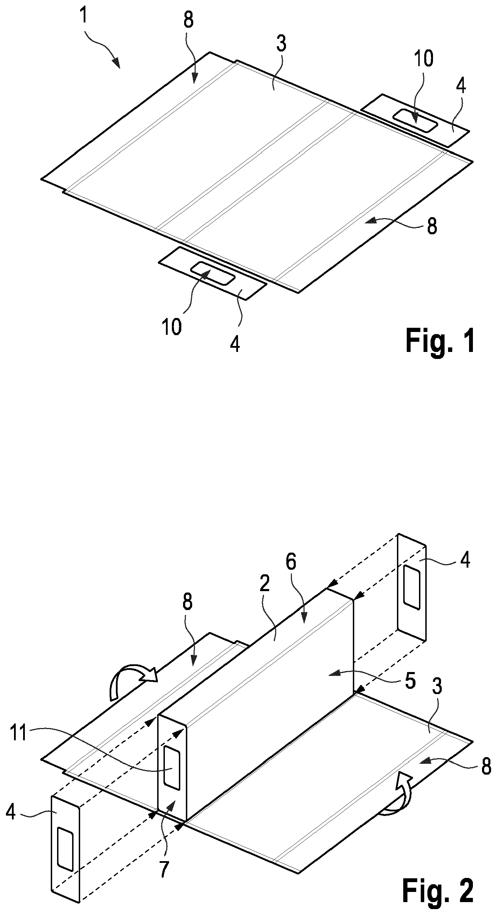

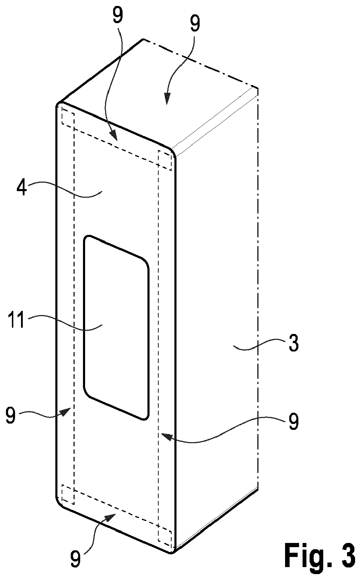

Die Fig. 1 zeigt Zuschnitte aus einem oder mehreren Folienwerkstoffen zur Ausbildung einer Umhüllung 1 für ein Gehäuse 2 einer erfindungsgemäßen Batterie. Ein erster Zuschnitt ist zur Ausbildung eines ersten Umhüllungsteils 3 vorgesehen. Dieser wird im Rahmen der Herstellung der Batterie derart um das Gehäuse 2 gewickelt (vgl. Fig. 2), dass dieser die Großseiten 5 und die Längsseiten 6 des Gehäuses 2 umgibt beziehungsweise überdeckt. Dabei überlappen Endabschnitte 8 des ersten Umhüllungsteils 3 einander und bilden somit eine Nahtstelle 9 aus, die im Bereich einer der Längsseiten 6 des Gehäuses 2 angeordnet ist (vgl. Fig. 3). Der Zuschnitt für den ersten Umhüllungsteil 3 ist derart dimensioniert, dass dieser auch teilweise die Stirnseiten 7 des Gehäuses 2, konkret jeweils einen Abschnitt entlang sämtlicher der Ränder der Stirnseiten 7, überdeckt (vgl. Fig. 3).

Zwei weitere Zuschnitte bilden jeweils einen zweiten Umhüllungsteil 4 aus, wobei diese zweiten Umhüllungsteile 4 jeweils zur Abdeckung einer der Stirnseiten 7 des Gehäuses 2 vorgesehen sind. In einem zentralen Abschnitt weisen die zweiten Umhüllungsteile 4 jeweils einen rechteckigen Ausschnitt 10 auf, durch den sich jeweils ein Batteriepol 11 der Batterie erstrecken kann. Die Umfangsformgebung der zweiten Umhüllungsteile 4 ist möglichst exakt an diejenigen der Stirnseiten 7 des Gehäuses 2 angepasst. Die zweiten Umhüllungsteile 4, die erst nach dem ersten Umhüllungsteil 3 an dem Gehäuse 2 angebracht werden, überlappen so die an den Stirnseiten 7 vorhandenen Abschnitte des ersten Umhüllungsteils 3 und bilden dadurch ebenfalls Nahtstellen 9 aus.

Die Umhüllungsteile 3, 4 können innenseitig, d.h. auf denjenigen Seiten, die für einen Kontakt mit dem Gehäuse 2 vorgesehen sind, mit einer Klebeschicht versehen sein, so dass unmittelbar mit dem Anbringen der Umhüllungsteile 3, 4 an dem Gehäuse 2 Klebeverbindungen zwischen diesen Komponenten ausgebildet werden.

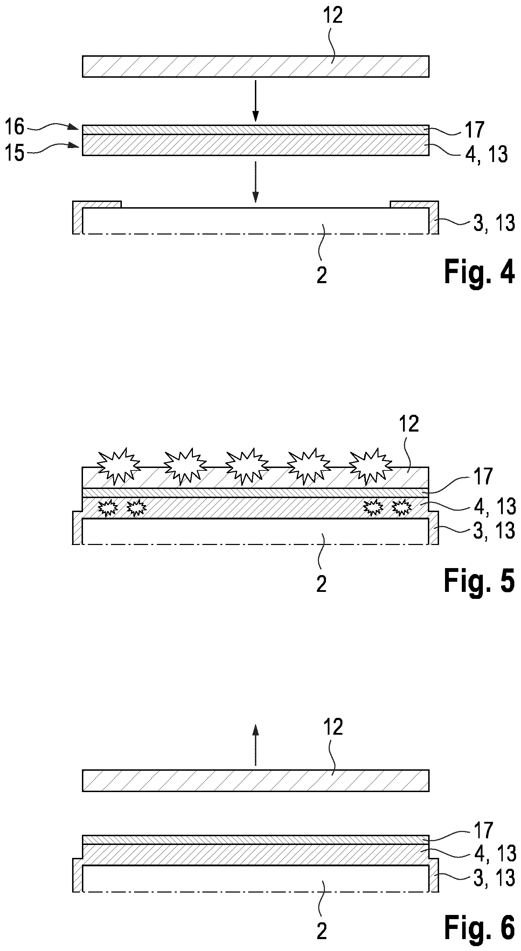

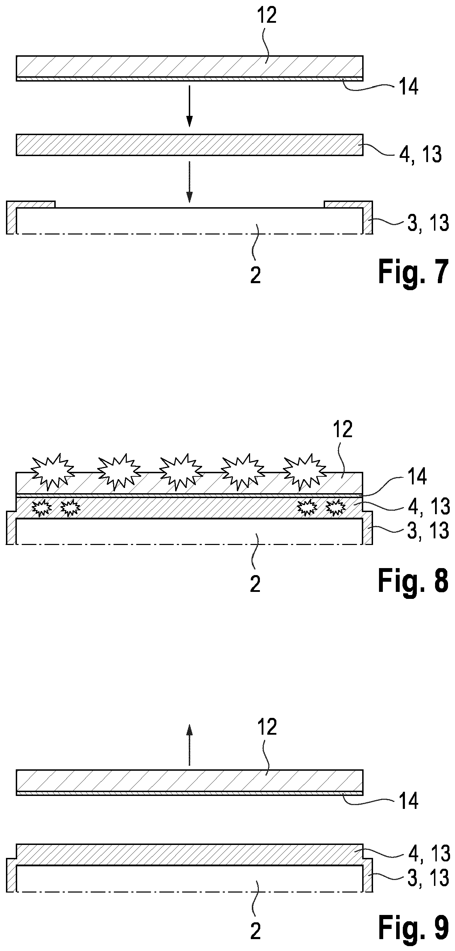

Um eine möglichst gut abgedichtete Umhüllung 1 auszubilden ist erfindungsgemäß vorgesehen, die Überlappungen der Umhüllungsteile 3, 4 an sämtlichen der Nahtstellen 9 zu verschweißen. Ein entsprechendes Vorgehen ist jeweils in den Fig. 4 bis 6 und 7 bis 9 für ein Verschweißen der zwischen dem ersten Umhüllungsteil 3 und einem zweiten Umhüllungsteil 4 ausgebildeten Nahtstellen 9 einer erfindungsgemäßen Batterie, beispielsweise einer Batterie gemäß den 2 und 3, dargestellt. Dabei zeigen die Fig. 4 bis 6 einerseits und die Fig. 7 bis 9 andererseits unterschiedliche Ausführungsformen der zweiten Umhüllungsteile 4 und, daraus folgend, die Verwendung unterschiedlicher Schweißwerkzeuge 12.

Gemäß beiden Ausführungsformen ist vorgesehen, ein Verschweißen der Umhüllungsteile 3, 4 beziehungsweise des Folienwerkstoffs oder der Folienwerkstoffe, aus dem/denen die Umhüllungsteile 3, 4 ausgebildet sind, zu realisieren. Hierzu wird ein heißes Schweißwerkzeug 12, das vorzugsweise elektrisch beheizt wird, indem Heizelemente (nicht dargestellt) in dieses integriert sind, auf den jeweiligen zweiten Umhüllungsteil 4, der bereits an dem Gehäuse 2 angebracht ist, gedrückt. Durch einen Übergang von Wärmeenergie von dem Schweißwerkzeug 12 auf die Materialien des Folienwerkstoffs oder der Folienwerkstoffe der Umhüllungsteile 3, 4 werden diese zumindest teilweise temporär aufgeschmolzen (vgl. Fig. 5 und 8). Nach einem Entfernen des Schweißwerkzeugs 12 und einem ausreichenden Abkühlen der Schmelze, was zu einem Erstarren der Schmelze führt, ist eine entsprechende stoffschlüssige (Schweiß-)Verbindung zwischen den Umhüllungsteilen 3, 4 ausgebildet (vgl. Fig. 6 und 9).

Das Schweißwerkzeug 12 kann vorzugsweise jeweils derart ausgestaltet sein, dass es den zweiten Umhüllungsteil 4 lediglich in den Bereich der Nahtstellen 9 kontaktiert. Hierzu kann dieses beispielsweise die Form eines rechteckigen Rahmens aufweisen. Auch kann vorgesehen sein, dass das Schweißwerkzeug 12 den zweiten Umhüllungsteil 4 jeweils in einem größeren Abschnitt, gegebenenfalls vollflächig kontaktiert, dabei jedoch nur im Bereich der Nahtstellen 9 entsprechend temperiert ist. Zudem kann vorgesehen sein, dass das gesamte Schweißwerkzeug 12 den zweiten Umhüllungsteil 4 jeweils in einem größeren Abschnitt, gegebenenfalls vollflächig kontaktiert und dabei zudem vollflächig temperiert ist.

Gemäß beiden Ausführungsformen besteht der Folienwerkstoff des ersten Umhüllungsteils 3 vollständig oder zumindest vollumfänglich aus einem ersten, elektrisch isolierenden und schweißbaren Kunststoff 13. Optional kann eine zusätzliche Schicht (nicht dargestellt) aus beispielsweise einem Metall vorgesehen sein, die vollständig beziehungsweise vollumfänglich in den ersten Kunststoff 13 eingebettet ist.

Bei der Ausführungsform gemäß den Fig. 7 bis 9 bestehen der erste Umhüllungsteil 3 und die zweiten Umhüllungsteile 4 aus demselben Folienwerkstoff oder aus unterschiedlichen Folienwerkstoffen, die sich jedoch nicht materialtechnisch beziehungsweise stofflich sondern beispielsweise nur hinsichtlich der Materialstärke unterscheiden, so dass durch identische Materialpaarungen eine vorteilhafte Schweißbarkeit der Nahtstellen 9 der Umhüllung 1 realisiert werden kann. Da der Kunststoff, aus dem sämtliche der Umhüllungsteile 3, 4 zumindest vollumfänglich ausgebildet sind, dafür ausgelegt ist, aufgrund des Übergangs von Wärmeenergie von dem Schweißwerkzeug 12 zu schmelzen, ist vorgesehen, dass das Schweißwerkzeug 12 eine Kontaktfläche mit einer Antihaftwirkung aufweist, die durch eine entsprechende Beschichtung 14 aus beispielsweise PTFE realisiert sein kann. Dies verhindert ein zu starkes Anhaften des aufgeschmolzenen und gegebenenfalls schon (teilweise) wieder erstarrten (ersten) Kunststoffs 13 an dem Schweißwerkzeug 12, was anderenfalls zu einer Beschädigung der Umhüllung 1 beim Entfernen des Schweißwerkzeugs 12 (vgl. Fig. 9) führen könnte.

Bei der Ausführungsform gemäß den Fig. 4 bis 6 bestehen die zweiten Umhüllungsteile 4 einerseits und der erste Umhüllungsteil 3 andererseits aus auch materialtechnisch unterschiedlichen Folienwerkstoffen. Der Folienwerkstoff der zweiten Umhüllungsteile 4 weist eine erste, innen liegenden Schicht 15 aus demselben (ersten) Kunststoff 13 auf, aus dem auch der Folienwerkstoff des ersten Umhüllungsteils 3 zumindest vollumfänglich ausgebildet ist. Zusätzlich dazu weist der Folienwerkstoff der zweiten Umhüllungsteile 4 eine zweite, außen liegende Schicht 16 aus einem zweiten Material 17, das vorzugsweise ebenfalls ein elektrisch isolierender Kunststoff sein kann, auf. Das zweite Material 17 weist jedoch im Vergleich zu dem (ersten) Kunststoff 13 der ersten Schicht 15 eine höhere Schmelztemperatur auf. Dabei ist die Schmelztemperatur dieses zweiten Materials 17 so hoch, dass diese durch den Übergang von Wärmeenergie von dem Schweißwerkzeug 12 zumindest nicht innerhalb einer definierten Zeitspanne, die für ein Andrücken des Schweißwerkzeugs 12 an die zweiten Umhüllungsteile 4 vorgesehen ist, erreicht wird. Dadurch kann auch ohne eine Beschichtung des Schweißwerkzeugs 12 zur Realisierung einer Antihaftwirkung ein zu starkes Anhaften des Schweißwerkzeugs 12 an den zweiten Umhüllungsteilen 4 verhindert werden. Das Schweißwerkzeug 12 kann dadurch vereinfacht ausgestaltet sein.

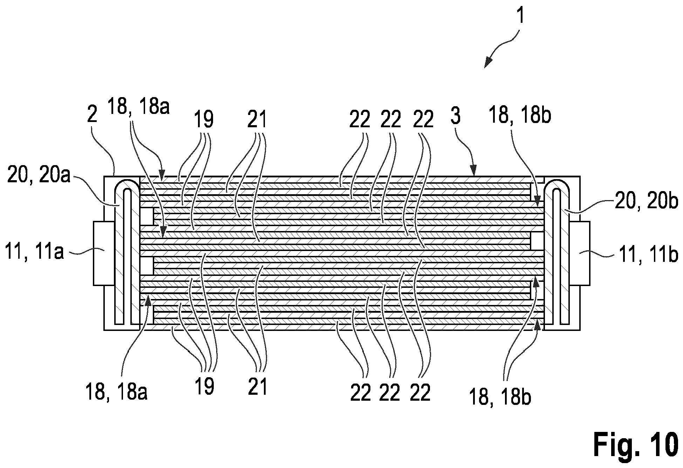

Die Batterie kann gemäß der Fig. 10 eine Mehrzahl von innerhalb des Gehäuses 2 angeordneten Batterieelementen umfassen. Die Batterieelemente beziehungsweise die diese ausbildenden Komponenten können dabei in Form eines Batterieelementestapels vorliegen. Der Batterieelementestapel umfasst dann in abwechselnder Reihenfolge plattenförmige Elektroden 18 und elektrisch isolierende, plattenförmige Separatoren 19. Die Elektroden 18 liegen dabei in dem Batterieelementestapel wiederum abwechselnd als erste Elektroden 18a, die bei einem Entladen der Batterie als Anoden fungieren, und als zweite Elektroden 18b, die bei einem Entladen der Batterie als Kathoden fungieren, vor. Die Separatoren 19 können gleichzeitig auch ein Festelektrolyt der Batterieelemente sein. Alternativ kann innerhalb des Gehäuses 2 ein insbesondere flüssiger Elektrolyt angeordnet sein, mit dem die Separatoren 19 getränkt sind. Die plattenförmigen Elektroden 18 und Separatoren 19 weisen eine (sehr flache) Quaderform auf, wodurch sich in Verbindung mit der Stapelung auch eine Quaderform des Batterieelementestapels ergibt.

Die Batterieelemente können weiterhin Stromableiter 20 umfassen, die jeweils elektrisch leitend mit einer der Elektroden 18 verbunden sind, wobei erste Stromableiter 20a zu den ersten Elektroden 18a und zweite Stromableiter 20b zu den zweiten Elektroden 18b gehören. Sämtliche erste Stromableiter 20a sind an einer ersten Stirnseite und sämtliche zweite Stromableiter 20b sind an einer zweiten Stirnseite des Batterieelementestapels angeordnet. Dies ermöglicht eine vorteilhafte Verbindung der verschiedenen (ersten und zweiten) Stromableiter 20 mit jeweils einem der in das Gehäuse 2 integrierten Batteriepole 11.

Die Batteriepole 11 sind derart in jeweils eine der Stirnseiten 7 des Gehäuses 2 integriert, dass ein Abschnitt davon innerhalb des Gehäuses 2 für eine Verbindung mit den Stromableitern 20 der jeweils zugeordneten Elektroden 18 zur Verfügung steht. Dabei sind sämtliche erste Stromableiter 20a mit einem ersten (11a) der Batteriepole 11 und sämtliche zweite Stromableiter 20a mit einem zweitem (11b) der Batteriepole 11 verbunden. Ein weiterer Abschnitt der Batteriepole 11, der jeweils außerhalb des Gehäuses 2 angeordnet ist, ist für eine externe elektrische Kontaktierung der Batterie vorgesehen.

Die Stromableiter 20 können mit den Elektroden 18 integral ausgestaltet sein, indem jeweils ein flächiges Substrat 21 aus einem elektrisch leitfähigen Material, beispielsweise einer Metallfolie, in einem Abschnitt, der Teil der Elektrode 18 ist, beidseitig mit einem anodisch oder kathodisch wirksamen Aktivmaterial 22 beschichtet ist, während ein unbeschichteter Abschnitt des Substrats 21 den zu der jeweiligen Elektrode 18 gehörenden Stromableiter 20 darstellt.

### BEZUGSZEICHENLISTE

- 1: Umhüllung
- 2: Gehäuse
- 3: erster Umhüllungsteil
- 4: zweiter Umhüllungsteil
- 5: Großseite des Gehäuses
- 6: Längsseite des Gehäuses
- 7: Stirnseite des Gehäuses
- 8: Endabschnitt des ersten Umhüllungsteils
- 9: Nahtstelle
- 10: Ausschnitt des zweiten Umhüllungsteils
- 11: Batteriepol
- 11a: erster Batteriepol
- 11b: zweiter Batteriepol
- 12: Schweißwerkzeug
- 13: erster Kunststoff
- 14: Beschichtung mit Antihaftwirkung
- 15: erste Schicht des zweiten Umhüllungsteils
- 16: zweite Schicht des zweiten Umhüllungsteils
- 17: zweites Material
- 18: Elektrode
- 18a: erste Elektrode
- 18b: zweite Elektrode
- 19: Separator
- 20: Stromableiter
- 20a: erster Stromableiter
- 20b: zweiter Stromableiter
- 21: Substrat
- 22: Aktivmaterial

## Patentansprüche

1. Batterie mit einem oder mehreren Batterieelementen, die in einem Gehäuse (2) aufgenommen sind, und mit einer elektrisch isolierenden Umhüllung (1) für das Gehäuse (2), wobei die Umhüllung (1) aus mindestens einem Folienwerkstoff ausgebildet ist, wobei der mindestens eine Folienwerkstoff an mindestens einer Nahtstelle (9) überlappt, **dadurch gekennzeichnet, dass** der mindestens eine überlappende Folienwerkstoff an der mindestens einen Nahtstelle (9) verschweißt ist.

2. Batterie gemäß Anspruch 1, **dadurch gekennzeichnet, dass** die Umhüllung (1) mit dem Gehäuse (2) verklebt ist.

3. Batterie gemäß Anspruch 1 oder 2, **dadurch gekennzeichnet, dass** der mindestens eine Folienwerkstoff zumindest an den in der Nahtstelle (9) liegenden Kontaktflächen aus demselben Material besteht.

4. Batterie gemäß einem der Ansprüche 1 bis 3, **dadurch gekennzeichnet, dass** der mindestens eine Folienwerkstoff oder mindestens einer von mehreren Folienwerkstoffen vollständig aus einem einzigen Material ausgebildet ist.

5. Batterie gemäß einem der vorhergehenden Ansprüche, **dadurch gekennzeichnet, dass** der mindestens eine Folienwerkstoff oder mindestens einer von mehreren Folienwerkstoffen aus mindestens zwei Materialen ausgebildet ist.

6. Batterie gemäß Anspruch 5, **dadurch gekennzeichnet, dass** der Folienwerkstoff eine erste, innen liegende Schicht (15) aus einem ersten der Materialien und eine zweite, außen liegende Schicht (16) aus einem zweiten der Materialien aufweist, wobei das erste Material eine niedrigere Schmelztemperatur als das zweite Material aufweist.

7. Batterie gemäß einem der vorhergehenden Ansprüche, **dadurch gekennzeichnet, dass** das Gehäuse (2) eine Quaderform aufweist, wobei die Umhüllung (1) an den Großseiten (5) und den Längsseiten (6) des Gehäuses (2) aus einem ersten Umhüllungsteil (3) und an den Stirnseiten (7) aus jeweils einem zweiten Umhüllungsteil (4) ausgebildet ist, wobei der erste Umhüllungsteil (3) und der zweite Umhüllungsteil (4) aus unterschiedlichen der Folienwerkstoffe bestehen.

8. Verfahren zum Herstellen einer Batterie mit einem oder mehreren Batterieelementen, die in einem Gehäuse (2) aufgenommen sind, und mit einer elektrisch isolierenden Umhüllung (1) für das Gehäuse (2), wobei die Umhüllung (1) aus mindestens einem Folienwerkstoff ausgebildet wird und wobei der mindestens eine Folienwerkstoff an mindestens einer Nahtstelle (9) überlappt, **dadurch gekennzeichnet, dass** der mindestens eine überlappende Folienwerkstoff an der mindestens einen Nahtstelle (9) verschweißt wird.

9. Verfahren gemäß Anspruch 8, **dadurch gekennzeichnet, dass** das Verschweißen mittels eines die Nahtstelle (9) kontaktierenden, heißen Schweißwerkzeugs (12) realisiert wird.

10. Verfahren gemäß Anspruch 9, **dadurch gekennzeichnet, dass** das Schweißwerkzeug (12) die Nahtstelle (9) mit einer Kontaktfläche kontaktiert, die eine Antihaftwirkung aufweist.
